Europäisches Patentamt

European Patent Office

Office européen des brevets

(19)

(11) Publication number: **0 078 455**
**B1**

(12) # EUROPEAN PATENT SPECIFICATION

(45) Date of publication of patent specification: **19.02.86**

(51) Int. Cl.⁴: **C 08 L 67/02**

(21) Application number: **82109709.4**

(22) Date of filing: **20.10.82**

(54) **A thermoplastic polyester composition.**

(30) Priority: **29.10.81 JP 173628/81**

(43) Date of publication of application:
**11.05.83 Bulletin 83/19**

(45) Publication of the grant of the patent:
**19.02.86 Bulletin 86/08**

(84) Designated Contracting States:
**BE DE FR GB IT NL**

(56) References cited:
**DE-A-2 555 258**
**GB-A-1 491 188**
**US-A-4 080 360**

(73) Proprietor: **POLYPLASTICS CO. LTD.**
**30 Azuchimachi 2-chome**
**Higashi-ku Osaka-shi (JP)**

(72) Inventor: **Kasuga, Takuzo**
**324 Miyashita**
**Fuji-shi Shizuoka (JP)**
Inventor: **Takahashi, Katsuhiko**
**324 Miyashita**
**Fuji-shi Shizuoka (JP)**
Inventor: **Nakashima, Tsuneyasu**
**Moritaya Bldg. 760 2-chome, Kizuki**
**Nakahara-ku, Kawasaki-shi, Kanagawa (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The present invention relates to a polyester resin composition improved in its molding characteristic. More particularly, it pertains to a thermoplastic polyester composition having as its major acid component an aromatic dibasic acid such as terephthalic acid, etc., with which such a trouble as corrosion of dies, etc., is relieved by inhibiting release of such an aromatic dibasic acid as terephthalic acid, etc., in the process of molding.

High molecular weight polyester or copolymerized polyesters produced from alkylene glycol and terephthalic acid or isophthalic acid are finding wide use as engineering plastics because of their excellent mechanical properties, electrical properties, molding characteristic, etc. Especially, polybutylene terephthalate resin manufactured from 1,4-butanediol and terephthalic acid or its derivatives, among other polyester resins above-mentioned, has excellent crystallinity, satisfactory molding characteristic, and high affinity to such inorganic fillers as glass fiber, etc. Then its mechanical properties, temperature of thermal deformation, etc., will be improved by addition of such a filler, and it will readily be made flame retardant without accompanying degradation in its physical properties. With these advantages, this resin is being widely used as a resin for extrusion molding.

However, as such a resin becomes handled in large amounts and for long times, in the process of molding with this resin, a gas containing as its main component such an aromatic dibasic acid as terephthalic acid, etc., is released; this gas adheres on the dies, thus depriving the molded surface of its smoothness, and giving rise to such troubles as corrosion of dies. As a result, frequent cleaning of dies and the like cares are required, posing grave problems in the phase of productivity and economy.

Accordingly, the resolution of this issue is very importantly linked to upgrading of productivity and improvement in economy and consequently, resource savings.

The present inventions, reflecting on these aspects of the problem, devoted themselves to the study which has led to the completion of this invention.

Thus the present inventors found out the possibility of inhibiting at a very high efficiency the release of such an aromatic dibasic acid as terephthalic acid.

As the hydantoin compound, any compounds having the hydantoin radical may be employed; they may have one or more radicals, or they may be in the high molecular state. As hydantoin compounds bearing radicals as substitute, those having alkyl group or allyl group or some other substituting radicals may be mentioned. The include, for example, hydantoin or hydantoin compounds derived from α-amino acids; especially, phenyl hydantoin and p-hydroxyphenyl hydantoin which are derived from phenyl glycine and p-hydroxyphenyl glycine are useful.

The amount of such a hydantoin compound added should be more than that sufficient to suppress the release of terephthalic acid. However, some compounds, if added in excess amount, will come out in the released gas in the process of molding. Careful handling is, therefore, necessary in utilizing low molecular weight hydantoin compounds.

As for the amount of these compounds to be added, their activity will be well recognized in the range of 0.01—10 parts (parts by weight; the same applies hereinafter); generally, they are used in the range of 0.01—5 parts, and preferably should selectively be used in 0.01—2 parts.

As the polyester resin to be used as the base, polyalkylene terephthalates such as polyethylene terephthalate, polytrimethylene terephthalate, polybutylene terephthalate, etc., may be named.

Besides, polyester resins denatured 20% with other glycols or dicarboxylic acids are also usable.

As the glycol component used for denaturing of polyesters, aliphatic or alicyclic or aromatic glycols including neopentyl glycol, 1,4 - dimethyl - lolcyclohexane, 2-methylpentane diol, 2 - methylpropane - (1,3) - diol, hexamethylene glycol and bisphenol A etc., may be listed. Then as the dicarboxylic acids to be used for denaturing, aromatic dicarboxylic acids including isophthalic acid and naphthalene dicarboxylic acid, etc., and aliphatic dicarboxylic acids including adipic acid, azelaic acid, dodecane dicarboxylic acid, etc., are available.

Appropriate polyester resins of this invention should have specific viscosities being higher than at least 0.5 at 23°C and 8% concentration in o-chlorophenol.

It should be noted that to the polyester resin compositions of this invention, such reinforcing agents as glass fiber, whisker, carbon fiber, glass bead, glass flake, etc., such inorganic fillers as calcium carbonate, talc, mica, clay, etc., and flame retarders, flame retarder assistants, pigments, dyes, lubricants, antistatic agents, plasticizers, ultraviolet ray absorbers, antioxidants, foaming agents, etc., may be added as desired.

In the following, a few embodiments of this invention and a control are presented, but this does not signify that this invention shall be limited, in the modes of its application, to these embodiments.

Example 1

One hundred parts of a composition composed of 70 parts of polybutylene terephthalate and 30 parts of glass fiber, with 0.1 part of p-hydroxyphenyl hydantoin added, was kneaded, and extruded, by a 40 mm single screw extruder. The extruded composition was pelletized, and dried with a hot air drier; thereafter, the amount of terephthalic acid released in the process of molding was measured.

In determining the amount of terephthalic acid released, pellets weighing 4 kg are subjected to a free flow for 30 minutes, actually using a molder, under a molding condition of the molder cylinder temperature being set at 260°C; the gas released was collected, and absorbed by dimethylsulfoxide; and then, the amount of terephthalic acid contained in the liquid gas determined by means of ultraviolet ray absorption spectrum. The result showed that the amount of terephthalic acid absorbed in dimethyl sulfoxide was found to be 0.05 mg/kg of pellets.

Control 1

Pellets of the same composition as that of Example 1 except that it did not contain p-hydroxyphenyl hydantoin were prepared, and for these pellets, the amount of terephthalic acid released was determined in the similar way to be 0.69 mg/kg of pellets.

Examples 2 and 3

Pellets were prepared similarly as in Example 1 except that the amount of p-hydroxyphenyl hydantoin was respectively set to 0.05 parts and 0.15 parts, and the amount of terephthalic acid released was found to be as follows, as determined in the similar way:

| Amount added (parts) of p-hydroxyphenyl hydantoin | Amount of terephthalic acid (mg/kg of pellets) |
|---|---|
| 0.05 | 0.10 |
| 0.15 | 0.06 |

Claims

1. A thermoplastic polyester composition formed by adding and mixing a hydantoin compound into a thermoplastic polyester resin having an aromatic dibasic acid as its major acid component.

2. A composition as specified in Claim 1 wherein the aromatic dibasic acid is terephthalic acid.

3. A composition as specified in Claim 2 wherein the thermoplastic polyester resins include polyethylene terephthalate, polytrimethylene terephthalate, and polytetramethylene terephthalate resins or their blends.

4. A composition as specified in any of Claims 1 to 3 wherein as the hydantoin compound, hydantoin or any hydantoin compound bearing some radical as a substituent at the fifth position is included.

5. A composition as specified in Claim 4 wherein the hydantoin compound is parahydroxyphenyl hydantoin.

Patentansprüche

1. Thermoplastische Polyesterzusammensetzung, hergestellt durch Zugeben und Einmischen einer Hydantoin-Verbindung in ein thermoplastisches Polyesterharz, das als Hauptsäurekomponente eine aromatische, dibasische Säure besitzt.

2. Zusammensetzung nach Anspruch 1, dadurch gekennzeichnet, daß die aromatische, dibasische Säure Terephthalsäure ist.

3. Zusammensetzung nach Anspruch 2, dadurch gekennzeichnet, daß die thermoplastischen Polyesterharze Polyethylenterephthalat-, Polytrimethylenterephthalat- und Polytetramethylenterephthalatharz oder deren Mischungen beinhalten.

4. Zusammensetzung nach mindestens einem der Ansprüche 1 bis 3, dadurch gekennzeichnet, daß als Hydantoin-Verbindung Hydantoin oder irgendeine Hydantoin-Verbindung, die als Substituent an der 5-Stellung einen Rest trägt, enthalten ist.

5. Zusammensetzung nach Anspruch 4, dadurch gekennzeichnet, daß die Hydantoin-Verbindung Parahydroxyphenylhydantoin ist.

Revendications

1. Composition de polyester thermoplastique formée en ajoutant et en mélangeant un composé de l'hydratoïne dans une résine polyester thermoplastique ayant un diacide aromatique comme constituant principal.

2. Composition suivant la revendication 1, dans laquelle le diacide aromatique est l'acide téréphtalique.

3. Composition suivant la revendication 2, dans laquelle les résines polyester thermoplastiques comprennent les résines de polyéthylène téréphtalate, de polytriméthylène téréphtalate, et de polytétraméthylène téréphtalate ou leurs mélanges.

4. Composition suivant l'une quelconque des revendications 1 à 3, dans laquelle est inclus, comme composé de l'hydantoïne, l'hydantoïne ou n-importe quel composé de l'hydantoïne portant un radical comme substituant en position 5.

5. Composition suivant la revendication 4, dans laquelle le composé de l'hydantoïne est la parahydroxyphényl hydantoïne.